# EUROPÄISCHE PATENTSCHRIFT

(11) **EP 3 450 264 B1**
(45) Veröffentlichungstag und Bekanntmachung des Hinweises auf die Patenterteilung: **11.11.2020**
(21) Anmeldenummer: 18192434.1
(22) Anmeldetag: 04.09.2018
(51) Int. Cl.: B60R 25/20, H01H 27/00

(54) **GEHÄUSE FÜR EINEN ANLASSSCHALTER EINES KRAFTFAHRZEUGES**
HOUSING FOR A START-UP SWITCH OF A MOTOR VEHICLE
BOÎTIER POUR UN CONTACTEUR DE DÉMARRAGE D'UN VÉHICULE AUTOMOBILE

(30) Priorität: 05.09.2017 DE 102017120391
(43) Veröffentlichungstag der Anmeldung: 06.03.2019
(73) Patentinhaber: HUF Hülsbeck & Fürst GmbH & Co. KG, 42551 Velbert (DE)
(72) Erfinder: Surajew, Pavel, 85258 Weichs (DE)
(74) Vertreter: Bals, Rüdiger

(56) Entgegenhaltungen:
- WO-A1-2009/104453
- DE-A1-102015 108 664
- US-A1- 2003 231 100

## Beschreibung

Die Erfindung betrifft ein Gehäuse für einen Anlassschalter eines Kraftfahrzeuges nach dem Oberbegriff des unabhängigen Anspruches 1. Zudem betrifft die Erfindung ein System nach dem unabhängigen Anspruch 5, welches mit einem entsprechenden Gehäuse und einem Verbindungselement für ein Betätigungselement des Anlassschalters ausgeführt ist, sowie ein Schließmodul nach dem unabhängigen Anspruch 10, welches mit einem entsprechenden System und einem Betätigungselement für den Anlassschalter ausgeführt ist. Ferner betrifft die Erfindung ein Verfahren zum Fixieren eines Verbindungselementes für ein Betätigungselement eines Anlassschalters eines Kraftfahrzeuges in einer Montageposition innerhalb eines Gehäuses für den Anlassschalter nach dem Oberbegriff des unabhängigen Anspruches 13.

Bei bekannten Anlassschaltern für Kraftfahrzeuge werden vor der Befestigung des Anlassschalters in einem Gehäuse mehrteilige Montagehilfen für ein Betätigungselement des Anlassschalters im selben Gehäuse eingesetzt. Das Betätigungselement für den Anlassschalter kann bspw. in Form eines Schließzylinders oder eines Start-Stopp-Schalters ausgeführt sein. Das Betätigungselement wird dabei zugänglich für einen Benutzer am Gehäuse angeordnet. Der Anlassschalter wird von außen unzugänglich im Gehäuse aufgenommen. Um die Verbindung zum Anlassschalter herzustellen, wird das Betätigungselement über ein Verbindungselement wirkungstechnisch mit dem Anlassschalter verbunden bzw. zur Einwirkung auf den Anlassschalter über das Verbindungselement vorbereitet. Die Befestigung des Anfassschalters, der Montagehilfen, des Betätigungselementes für den Anlassschalter und des Verbindungselementes für das Betätigungselement am Gehäuse gestaltet sich dabei zeit- und arbeitsintensiv, erfordert mehrere Schritte und einen Zugriff zum Gehäuse von unterschiedlichen Seiten, wobei der Monteur die oben genannten Bauteile aufwendig mit beiden Händen hantieren muss. Insbesondere das temporäre Fixieren des Verbindungselementes in dem Gehäuse ist technisch aufwendig und zeitintensiv. Das Verbindungselement ist so zu fixieren, dass dieses nach der Aufnahme des Betätigungselementes in dem Gehäuse aus der Fixierung gelöst wird und frei drehbar innerhalb des Gehäuses angeordnet bleibt. Derzeitige Lösungen sehen vor, dass das Verbindungselement durch externe zusätzliche Befestigungsmittel temporär in dem Gehäuse fixiert wird, wodurch ein erhöhter und komplizierter Montageaufwand erforderlich ist.

Ein bekannter Anlassschalter ist bspw. in der WO 2009/104453 A1 beschrieben.

Der Erfindung liegt daher eine Aufgabe zugrunde, die aus dem Stand der Technik bekannten Nachteile bei einem Gehäuse für einen Anlassschalter eines Kraftfahrzeuges zumindest zum Teil zu überwinden. Insbesondere ist es eine Aufgabe der vorliegenden Erfindung ein Gehäuse zu schaffen, welches eine schnelle und einfache Befestigung des Anlassschalters, des Betätigungselementes für den Anlassschalter und des Verbindungselementes für das Betätigungselement am Gehäuse ermöglicht. Vorzugsweise soll ein Monteur bei der Montage der Einzelteile aneinander entlastet werden. Weiterhin liegt der Erfindung eine Aufgabe zugrunde, ein System mit einem entsprechenden Gehäuse und einem Verbindungselement für ein Betätigungselement des Anlassschalters und ein Schließmodul mit einem entsprechenden System und einem Betätigungselement für den Anlassschalter zu schaffen, die einfach im Zusammenbau sind, die leicht am Kraftfahrzeug montiert und einfach in Betrieb genommen werden können. Zudem ist es eine Aufgabe der Erfindung, ein Verfahren zum Fixieren eines Verbindungselementes für ein Betätigungselement eines Anlassschalters eines Kraftfahrzeuges in einer Montageposition innerhalb eines Gehäuses für den Anlassschalter zur Verfügung zu stellen, welches einfach, vorzugsweise einhändig, schnell, bequem, zielsicher und in nur wenigen Schritten ausgeführt werden kann.

Die Erfindung stellt hierzu ein Gehäuse für einen Anlassschalter eines Kraftfahrzeuges mit den Merkmalen des unabhängigen Anspruches 1, insbesondere aus dem kennzeichnenden Teil, bereit. Zudem stellt die Erfindung ein System mit den Merkmalen des unabhängigen Anspruches 5 sowie ein Schließmodul mit den Merkmalen des unabhängigen Anspruches 10 zur Verfügung. Ferner sieht die Erfindung ein Verfahren zum Fixieren eines Verbindungselementes für ein Betätigungselement eines Anlassschalters eines Kraftfahrzeuges in einer Montageposition innerhalb eines Gehäuses für den Anlassschalter mit den Merkmalen des unabhängigen Anspruches 13 vor. In den abhängigen Ansprüchen zum Gehäuse, System und Schließmodul sowie in den abhängigen Verfahrensansprüchen sind bevorzugte Weiterbildungen der Erfindung aufgeführt. Merkmale, die zu den einzelnen Ausführungsformen des erfindungsgemäßen Gehäuses, Systems, Schließmoduls und des erfindungsgemäßen Verfahrens offenbart werden, können in der Weise miteinander kombiniert werden, dass bezüglich der Offenbarung zu den Ausführungsformen des erfindungsgemäßen Gehäuses, Systems, Schließmoduls und des erfindungsgemäßen Verfahrens stets wechselseitig Bezug genommen wird bzw. werden kann.

Die Erfindung stellt ein Gehäuse für einen Anlassschalter eines Kraftfahrzeuges bereit, aufweisend: einen Befestigungsabschnitt zum Aufnehmen eines Betätigungselementes für den Anlassschalter innerhalb des Gehäuses, wobei der Befestigungsabschnitt eine Führungsöffnung für das Betätigungselement aufweist, einen Verbindungsabschnitt zum Aufnehmen eines Verbindungselementes, an welchem das Betätigungselement befestigbar ist, innerhalb des Gehäuses, wobei der Verbindungsabschnitt eine Montageöffnung für das Verbindungselement aufweist, und einen Anschlussabschnitt zum Aufnehmen des Anlassschalters innerhalb des Gehäuses, wobei der Anschlussabschnitt eine Aufnahmeöffnung aufweist, die über die Montageöffnung im Verbindungsabschnitt fluchtend mit der Führungsöffnung im Befestigungsabschnitt verbunden ist, sodass das Verbindungselement durch die Führungsöffnung und durch die Montageöffnung zumindest zum Teil in die Aufnahmeöffnung im Anschlussabschnitt einführbar ist. Hierzu ist erfindungsgemäß vorgesehen, dass im Verbindungsabschnitt eine Montageeinheit integriert ist, die dazu ausgelegt ist, das Verbindungselement in einer Montageposition innerhalb des Gehäuses form- und/oder kraftschlüssig am Verbindungsabschnitt zu fixieren.

Das Betätigungselement kann im Sinne der Erfindung ein Schließzylinder oder ein Start-Stopp-Schalter sein. Der Anlassschalter kann dabei einen Teil eines Zündschlosses bzw. eines Schließmoduls, bspw. zum Verriegeln einer Lenksäule, des Kraftfahrzeuges bilden. Das erfindungsgemäße Gehäuse kann dabei seitlich an der Lenksäule oder auf der Mittelkonsole angeordnet sein bzw. einen Teil der Lenksäulenverkleidung oder der Mittelkonsole bilden. Der Anlassschalter ist geschützt im Inneren des Gehäuses angeordnet und erst durch Demontage des Betätigungselementes für den Anlassschalter und des Verbindungselementes für das Betätigungselement zugänglich, um sicherzustellen, dass nur der zum Schließzylinder passende Schüssel bzw. nur der berechtigte Benutzer den Schaltvorgang ausführen kann. Das Betätigungselement für den Anlassschalter und das Verbindungselement für das Betätigungselement erstrecken sich in Richtung von außen nach innen zum Anlassschalter durch das gesamte Gehäuse. Dabei sind der Befestigungsabschnitt des Gehäuses für das Betätigungselement, der Verbindungsabschnitt des Gehäuses für das Verbindungselement und der Anschlussabschnitt für den Anlassschalter vorgesehen.

In die Längsrichtung gesehen, ist vorzugsweise im Bereich der Mitte des Gehäuses ist die erfindungsgemäße Montageeinheit integriert. Integriert heißt im Sinne der Erfindung, dass die Montageeinheit in der Montageöffnung des Verbindungsabschnittes des Gehäuses ausgebildet ist und zumindest zum Teil die Montageöffnung definiert. Mit anderen Worten stellt die Montageeinheit einen Teil des Verbindungsabschnittes des Gehäuses dar, welcher sowohl zur Befestigung des Verbindungselementes für das Betätigungselement des Anlassschalters am Gehäuse dient, als auch im normalen Betrieb des Zündschlosses ein integraler Bestandteil des Gehäuses bleibt. Dabei kann die Montageeinheit im, vorzugsweise monolithisch ausgebildetem, Körper des Gehäuses materialeinheitlich und/oder monolithisch mit dem Verbindungsabschnitt ausgeformt, bspw. mithilfe eines Spritzgussverfahrens, und/oder dauerhaft, bspw. form und/oder kraftschlüssig mit dem Verbindungsabschnitt verbunden sein.

Der Erfindungsgedanke liegt dabei darin, dass die Montageeinheit eine Fixierung, bspw. eine Verrastung, für das Verbindungselement des Betätigungselementes am Gehäuse, insbesondere am Verbindungsabschnitt des Gehäuses, bildet. Vorzugsweise ist die Fixierung form- und/oder kraftschlüssig, also lösbar. Eine solche Fixierung kann bspw. mithilfe eines Bajonettverschlusses realisiert werden. Die Montageeinheit verbleibt dabei als ein integraler Bestandteil des Gehäuses auch nach der Montage sämtlicher Komponenten des Schließmoduls am Gehäuse. Zugleich kann das Verbindungselement nach dem Fixieren in einer Montageposition innerhalb des Gehäuses zumindest vorübergehend als eine Montagehilfe zum Befestigen des Betätigungselementes am Gehäuse, insbesondere am Befestigungsabschnitt des Gehäuses, dienen. Nach dem Fixieren des Verbindungselementes in der Montageposition innerhalb des Gehäuses kann schließlich das Betätigungselement, bspw. in Form eines Schließzylinders über seinen drehbaren Kern, am Verbindungselement in Rolle der Montagehilfe, sogar einhändig, befestigt werden. Sind das Betätigungselement, bspw. über den drehbaren Kern des Schließzylinders, und das Verbindungselement miteinander gekoppelt, schiebt das Betätigungselement das Verbindungselement aus der Montageposition heraus in Richtung zum Anlassschalter, sodass das Verbindungselement von der Montageeinheit losgelöst wird und zumindest zum Teil in die Aufnahmeöffnung des Anschlussabschnittes des Gehäuses hineinragt. Anschließend stellt das Betätigungselement mit seinem äußeren Teil eine feste Verbindung zum Gehäuse her. Der drehbare Kern des Betätigungselementes bleibt aber weiterhin mit dem Verbindungselement fest verbunden. Ist das Verbindungselement in dieser Position angekommen, befindet es sich nun in einer Betriebsposition, in welcher das Verbindungselement losgelöst von der Montageinheit und somit frei drehbar ist. In der Betriebsposition kann das Verbindungselement im Betrieb des Anlassschalters die Wirkverbindung zwischen dem Betätigungselement und dem Anlassschalter herstellen.

Mit anderen Worten agiert das Verbindungselement in der Montageposition zunächst als eine Montagehilfe, wobei das Verbindungselement durch die Montageeinheit fest am Gehäuse fixiert ist. In der Betriebsposition, in welche das Verbindungselement durch das Betätigungselement herausgeschoben wird und in welcher das Verbindungselement losgelöst von der Montageeinheit und somit frei drehbar ist, agiert das Verbindungselement schließlich als ein Übertragungsglied zum Herstellen einer Wirkverbindung zwischen dem Betätigungselement und dem Anlassschalter.

Somit bringt die Montageeinheit mehrere Vorteile mit sich. Zum einen erweitert die Montageeinheit die Funktionalität des Verbindungselementes, sodass das Verbindungselement zunächst, zumindest vorübergehend als eine Montagehilfe agiert und danach dauerhaft als Übertragungsglied zum Herstellen einer Wirkverbindung zwischen dem Betätigungselement und dem Anlassschalter dient. Zum anderen wird durch die Montageeinheit die Befestigung des Anlassschalters, des Betätigungselementes für den Anlassschalter und des Verbindungselementes für das Betätigungselement am Gehäuse (d. h. der Zusammenbau des Schließmoduls) erheblich erleichtert, weil das Verbindungselement sowie die Montageeinheit dauerhaft im Gehäuse verbleiben können, weil zusätzliche Montagehilfen für das Betätigungselement entfallen und weil sowohl das Verbindungselement, als auch das Betätigungselement einhändig am Gehäuse befestigt werden können. Dabei kann der Monteur im ersten Schritt das Verbindungselement in das Gehäuse bis zum Verbindungsabschnitt hineinstecken und, vorzugsweise durch Drehen, an der Montageinheit verrasten lassen. Danach hat der Monteur beide Hände frei. Anschließend kann der Monteur das Betätigungselement in das Gehäuse einführen und mit einer einzigen linearen Bewegung das Betätigungselement (z. B über ein inneres bewegbares Teil) am Verbindungselement ankoppeln, das Verbindungselement aus dem Eingriff mit der Montageeinheit lösen und das Betätigungselement (z. B. über ein äußeres stationäres Teil) am Gehäuse befestigen. Somit kann die Fixierung des Verbindungselementes am Gehäuse und der Zusammenbau des Schließmoduls erheblich erleichtert werden. Die Montagezeit kann dabei deutlich reduziert werden. Insbesondere die Realisierung der Montageeinheit als Bajonettverschluss ermöglicht eine besonders einfache und schnelle temporäre Fixierung des Verbindungselementes an dem Gehäuse.

Gemäß der Erfindung ist es vorgesehen, dass die Montageeinheit ein zumindest zum Teil zylinder- und/oder ringförmiges Rastelement aufweist, welches mit einem Gegenrastelement des Verbindungselementes zum form- und/oder kraftschlüssigen Fixieren des Verbindungselementes am Verbindungsabschnitt zusammenwirkt. Ein zumindest zum Teil zylinder- und/oder ringförmiges Rastelement ist einfach in der Herstellung und kann leicht mit einer Montageöffnung ausgeführt werden. Ein solches Rastelement kann außerdem ein einfaches Aufnehmen des Verbindungselementes ermöglichen, indem das Verbindungselement linear entlang der Drehachse des zylinder-und/oder ringförmigen Rastelementes in diesen eingeführt werden kann.

Weiterhin kann im Rahmen der Erfindung bei einem Gehäuse vorgesehen sein, dass die Montageeinheit, insbesondere das Rastelement, eine entlang einer Montagerichtung des Betätigungselementes am Gehäuse ausgerichtete Führungsnut aufweist, in der ein Gegenrastelement des Verbindungselementes beim Einstecken des Verbindungselementes in die Montageeinheit führbar ist. Die Führungsnut kann dabei parallel Drehachse des zylinder- und/oder ringförmigen Rastelementes verlaufen. Die Führungsnut kann einfach in Form eines Längsschlitzes an der Montageeinheit, insbesondere am Rastelement, innerhalb der Montageöffnung ausgebildet sein. Die Führungsnut kann eine haptische Rückmeldung über die richtige Ausrichtung des Verbindungselementes innerhalb der Montageeinheit angeben. Somit kann der Monteur bei der Montage des Schließmoduls intuitiv geführt werden.

Zudem kann die Erfindung bei einem Gehäuse vorsehen, dass die Montageeinheit, insbesondere das Rastelement, eine radial zu einer Montagerichtung des Betätigungselementes am Gehäuse verlaufende Montagekulisse aufweist, in der ein Gegenrastelement des Verbindungselementes durch ein Drehen des Verbindungselementes nach dem Einstecken des Verbindungselementes in die Montageeinheit führbar ist, bis eine form- und/oder kraftschlüssige Verbindung des Verbindungselementes mit der Montageeinheit hergestellt ist. Die Montagekulisse kann dabei an einer Stirnseite des Rastelementes ausgebildet sein und sich radial zur Drehachse des Rastelementes erstrecken. Nachdem das Verbindungselement durch das Rastelement durchgesteckt ist, kann es gedreht werden, indem das Gegenrastelement des Verbindungselementes bis zu einem Anschlag in der Montagekulisse geführt wird. Somit kann eine einfache Steck-Drehbewegung zum Fixieren des Verbindungselementes an der Montageeinheit ausgeführt werden. Hierzu benötigt der Monteur nur eine Hand. Vorteilhafterweise bleiben dabei zusätzliche Montagehilfen und/oder Befestigungselemente für das Verbindungselement am Gehäuse erspart. Alleine die Montageeinheit und das Verbindungselement bilden erfindungsgemäß ein in sich geschlossenes System zum Herstellen einer form- und/oder kraftschlüssigen Verbindung, lediglich für eine begrenzte Zeit, nur zur Befestigung des Betätigungselementes am Verbindungselement und schließlich am Gehäuse.

Außerdem kann im Rahmen der Erfindung bei einem Gehäuse vorgesehen sein, dass die Montageeinheit, insbesondere die Montagekulisse, eine entlang einer Montagerichtung des Betätigungselementes am Gehäuse ausgerichtete Einbuchtung aufweist, in der ein Gegenrastelement des Verbindungselementes form- und/oder kraftschlüssig zur Auflage bringbar ist. So kann der Monteur das Verbindungselement zunächst reinstecken, danach drehen und schließlich loslassen, wenn das Verbindungselement in die Einbuchtung entgegen einer Montagerichtung zurückfällt. Somit kann die erreichte Montageposition des Verbindungselementes signalisiert werden, in der das Verbindungselement am Gehäuse fixiert ist und in der der Monteur das Verbindungselement loslassen kann. Somit kann der Monteur die Fixierung des Verbindungselementes am Gehäuse einfach und kontrolliert ausführen, wobei der Monteur deutlich entlastet und das Verbindungselement nur mit einer Hand geführt werden kann.

Des Weiteren kann im Rahmen der Erfindung bei einem Gehäuse vorgesehen sein, dass die Montageeinheit ein Federelement aufweist, um das Verbindungselement beim Einführen in die Montageeinheit mit einer Federkraft in eine entgegengesetzte Richtung zu einer Montagerichtung des Betätigungselementes am Gehäuse zu beaufschlagen. Somit kann das Einstecken des Verbindungselementes in das Gehäuse das Federelement vorspannen, wobei nach dem Drehen des Verbindungselementes in der Montagekulisse das Verbindungselement, ohne Hilfe des Monteurs, alleine durch die Kraft des sich entspannenden Federelementes in die Einbuchtung an der Montagekulisse zurückfallen kann.

Außerdem umfasst die Erfindung auch einen Anlassschalter mit dem erfindungsgemäßen Gehäuse sowie eine Verriegelungsvorrichtung, wie z. B. ein insbesondere mechanisches Lenkradschloss, mit einem derartigen Anlassschalter und entsprechendem Gehäuse.

Zudem stellt die Erfindung ein System bereit, welches ein Gehäuse für einen Anlassschalter eines Kraftfahrzeuges, welches wie oben beschrieben ausgeführt werden kann, und ein Verbindungselement für ein Betätigungselement des Anlassschalters, an welchem das Betätigungselement befestigbar ist, aufweist. Dabei ist das Verbindungselement in einer Montageposition innerhalb des Gehäuses form- und/oder kraftschlüssig am Verbindungsabschnitt des Gehäuses fixierbar und in einer Betriebsposition innerhalb des Gehäuses frei drehbar. Somit kann das Verbindungselement mehrere Funktionen in sich vereinen, nämlich die Funktion einer Montagehilfe und die Funktion eines Übertragungsgliedes in der Übertragungskette zum Herstellen einer Wirkverbindung zwischen dem Betätigungselement und dem Anlassschalter. Des Weiteren werden mithilfe des erfindungsgemäßen Systems die gleichen Vorteile erreicht, die oben im Zusammenhang mit dem erfindungsgemäßen Gehäuse beschrieben wurden, auf welche vorliegend vollumfänglich Bezug genommen wird.

Ferner kann die Erfindung bei einem System vorsehen, dass das Verbindungselement ein Gegenrastelement aufweist, welches beim Einführen des Verbindungselementes in das Gehäuse mit der Montageeinheit zusammengewirkt, um das Verbindungselement in der Montageposition innerhalb des Gehäuses form- und/oder kraftschlüssig am Verbindungsabschnitt des Gehäuses zu fixieren. Dabei ist es denkbar, dass das Gegenrastelement in Form einer Rastnase bzw. in Form eines Schlüsselbartes am länglichen Verbindungselement ausgebildet sein kann. Grundsätzlich ist eine beliebige Art einer form- und/oder kraftschlüssigen Verbindung zwischen der Montageeinheit und dem Verbindungselement denkbar. Am elegantesten erscheint jedoch eine Verbindung nach Art eines Bajonettverschlusses. Dabei kann das Gegenrastelement in Form einer Rastnase zunächst in einer länglichen Führungsnut der Montageeinheit entlang einer Montagerichtung geführt werden, danach in einer quer dazu ausgerichteten Montagekulisse der Montageeinheit gedreht werden, bis das Gegenrastelement mithilfe einer zwischengespeicherten Federkraft zurück entgegen der Montagerrichtung in einer Einbuchtung der Montagekulisse einschnappen kann. somit kann auf eine einfache und elegante Weise eine vorübergehende Fixierung des Verbindungselementes an der Montageinheit erreicht werden.

Weiterhin kann die Erfindung bei einem System vorsehen, dass das Verbindungselement einen Betätigungsabschnitt zum Betätigen des Anlassschalters und eine Befestigungsaufnahme zum Befestigen des Betätigungselementes aufweisen kann. Mit anderen Worten kann das Verbindungselement in Form eines Stiftes (Betätigungsabschnitt) mit einer darauf angebrachten Befestigungsschale (Befestigungsaufnahme) ausgeformt sein. Dabei kann am Betätigungsabschnitt eine radial abstehende Nase als Gegenrastelement zum Zusammenwirken mit einem Rastelement der Montageeinheit ausgebildet sein. Somit kann ein einfaches und leicht handhabbares Verbindungselement mit einer erweiterten Funktionalität bereitgestellt werden.

Vorteilhafterweise kann der Betätigungsabschnitt des Verbindungselementes eine dem Anlassschalter zugewandte, im Wesentlichen konusförmige Verjüngung aufweisen. Dadurch kann die Verbindung zum Anlassschalter beim Zusammenbau des Systems leichter hergestellt werden. Zu beachten ist dabei, dass beim Herstellen der Verbindung zwischen dem Verbindungselement und dem Anlassschalter der Werker nunmehr das Betätigungselement in der Hand hält. Über das Betätigungselement muss das Verbindungselement gezielt zum Anlassschalter geführt werden. Über die Verjüngung kann der Werker eine Verbindung zum Anlassschalter nicht verfehlen.

Des Weiteren kann die Erfindung bei einem System vorsehen, dass das Gegenrastelement mindestens eine Führungshilfe, insbesondere in Form von abgerundeten Ecken, aufweist. Dabei ist es denkbar, dass die Führungshilfe in Form von abgerundeten Ecken eines Nockens bzw. eines Schlüsselbarts ausgebildet sein kann. Somit kann das Gegenrastelement ausbalanciert und ruckfrei in der Montageeinheit, insbesondere in der Führungsnut der Montageeinheit, aufgenommen werden. Dadurch kann die Fixierung des Verbindungselementes am Gehäuse erleichtert werden.

Zudem kann im Rahmen der Erfindung bei dem System vorgesehen sein, dass das Verbindungselement, insbesondere das Gegenrastelement, und die Montageeinheit einen, vorzugsweise federbelasteten, Bajonettverschluss bilden. Mithilfe eines Bajonettverschlusses kann eine einfache Befestigung des Verbindungselementes am Gehäuse und somit ein einfacher Zusammenbau des Systems ermöglicht werden. Zum Herstellen einer Bajonettverbindung braucht ein Werker nur eine Hand. Ein Bajonettverschluss kann nicht nur einfach hergestellt aber auch einfach gelöst werden, um das Verbindungselement in die Betriebsposition zu überführen und ein Verkanten des Verbindungselementes innerhalb des Gehäuses zu vermeiden. Ein federbelasteter Bajonettverschluss ist vorzugsweise selbstsichernd.

Ferner stellt die Erfindung ein Schließmodul bereit, welches ein System, welches wie oben beschrieben ausgeführt werden kann, und ein Betätigungselement für den Anlassschalter aufweist, wobei das Betätigungselement im Befestigungsabschnitt des Gehäuses innerhalb des Gehäuses aufnehmbar ist. Als Betätigungselement ist dabei ein Schließzylinder oder ein Start-Stopp-Schalter denkbar. Mithilfe des erfindungsgemäßen Schließmoduls werden die gleichen Vorteile erreicht, die oben im Zusammenhang mit dem erfindungsgemäßen Gehäuse und/oder mit dem erfindungsgemäßen System beschrieben wurden. Vorliegend wird vollumfänglich auf die oben beschriebenen Vorteile Bezug genommen.

Weiterhin kann bei einem Schließmodul im Sinne der Erfindung mindestens ein Anlassschalter für einen Anlasser eines Kraftfahrzeuges in Form eines Druckschalters, eines Schiebeschalters, eines Drehschalters oder eines Stufenschalters vorgesehen sein, wobei der Anlassschalter im Anschlussabschnitt des Gehäuses innerhalb des Gehäuses aufnehmbar ist. Somit kann ein Schließmodul für eine Lenksäule bzw. ein Zündschloss bereitgestellt werden, welches über das Betätigungselement einem berechtigten Benutzer einen Eingriff auf den Anlassschalter gewährt. Ein Anlassschalter kann dabei vier Stellungen aufweisen und mit einem Schließzylinder zum Verriegeln oder Entriegeln eines Lenkradschlosses, zum Einschalten und Ausschalten einer Stromversorgung im Kraftfahrzeug, zur Spannungsversorgung für Zündung und zum Anlassen des Motors zusammenwirken. Weiterhin ist es denkbar, dass der Anlassschalter alleine zum An- und Ausschalten des Motors vorgesehen sein und mit einem Start-Stopp-Schalter als Betätigungselement zusammenwirken kann.

Des Weiteren stellt die Erfindung ein Verfahren zum Fixieren eines Verbindungselementes für ein Betätigungselement eines Anlassschalters eines Kraftfahrzeuges in einer Montageposition innerhalb eines Gehäuses für den Anlassschalter bereit, wobei das Gehäuse wie oben beschrieben ausgeführt werden kann. Erfindungsgemäß umfasst das Verfahren folgende Schritte:
a) Einstecken des Verbindungselementes in eine Montageeinheit des Gehäuses,
b) Drehen des Verbindungselementes bis eine form- und/oder kraftschlüssige Verbindung mit der Montageeinheit hergestellt werden kann.

Somit kann durch eine Steck-Dreh-Bewegung eine einfache, schnelle und unkomplizierte Fixierung des Verbindungselementes am Gehäuse ermöglicht werden, die mit nur einer Hand ausgeführt werden kann. Außerdem ist es dabei vorteilhaft, dass der Monteur zwischen Schritt a) und b) die Hand nicht wechseln muss und die Steck-Drehbewegung als eine fließende Bewegung ausführen kann. Weiterhin werden mithilfe des erfindungsgemäßen Verfahrens die gleichen Vorteile erreicht, die oben im Zusammenhang mit dem erfindungsgemäßen Gehäuse, System und/oder Schließmodul beschrieben wurden, auf die vorliegend vollumfänglich Bezug genommen wird.

Ferner kann die Erfindung bei einem Verfahren vorsehen, dass im Schritt a) das Verbindungselement entgegen einer Federkraft eines Federelementes eingesteckt wird. Dadurch kann der Vorteil erreicht werden, dass eine Federenergie zwischengespeichert werden kann, die nach dem Loslassen des Verbindungselementes zum Einschnappen des Verbindungselementes in der Montageposition an der Montageeinheit des Gehäuses genutzt werden kann. Somit kann die Verrastung des Verbindungselementes innerhalb des Gehäuses unterstützt durch die Federkraft erfolgen, nachdem der Werker eine Steck-Drehbewegung ausgeführt hat.

Weiterhin kann im Rahmen der Erfindung bei einem Verfahren vorgesehen sein, dass das Verfahren mindestens einen weiteren Schritt aufweist:
c) Zurückbewegen des Verbindungselementes durch Entspannen eines Federelementes der Montageeinheit bis das Verbindungselement in einer Einbuchtung der Montageeinheit aufgenommen wird, wodurch eine form- und/oder kraftschlüssige Verbindung des Verbindungselementes mit der Montageeinheit hergestellt wird.

Dadurch kann auf eine einfache Art und Weise, unter Entlastung des Monteurs form-und/oder kraftschlüssige Verbindung des Verbindungselementes mit der Montageeinheit hergestellt werden. Die Montageeinheit, insbesondere eine Rastelement der Montageeinheit, besitzt einen Längsschlitz, ein sogenannte Führungsnut, an dessen Ende sich rechtwinklig eine Querkulisse, eine sogenannte Montagekulisse ansetzt. Das Verbindungselement besitzt dagegen eine Rastnase, ein sogenanntes Gegenrastelement, welches durch die Führungsnut reingesteckt und in der Montagekulisse gedreht wird, bis die Einbuchtung in der Montagekulisse erreicht wird, in der das Gegenrastelement durch Entspannen der Federkraft zur Auflage kommen kann.

Weitere Maßnahmen und Vorteile sowie technische Merkmale der Erfindung ergeben sich aus den Ansprüchen, der nachfolgenden Beschreibung und den Zeichnungen. Dabei können unterschiedliche Merkmale für sich alleine und in einer beliebigen Kombination vorteilhaft sein, ohne den Rahmen der Erfindung zu verlassen. In den nachstehenden Figuren ist das erfindungsgemäße Gehäuse, das erfindungsgemäße System und das erfindungsgemäße Schließmodul in mehreren Ausführungsbeispielen detailliert dargestellt. Es zeigen:
- Fig. 1a: eine schematische Darstellung eines erfindungsgemäßen Schließmoduls in einem zusammengebauten Zustand,
- Fig. 1b: eine schematische Darstellung eines erfindungsgemäßen Systems einschließlich eines Gehäuses und eines erfindungsgemäßen Verbindungselementes vor dem Fixieren des Verbindungselementes innerhalb des Gehäuses,
- Fig. 2: eine Schnittdarstellung eines erfindungsgemäßen Gehäuses und eine Montagerichtung für ein erfindungsgemäßes Verbindungselement innerhalb des Gehäuses,
- Fig. 3: eine Schnittdarstellung eines erfindungsgemäßen Gehäuses und eines erfindungsgemäßen Verbindungselementes nach dem Reinstecken des Verbindungselementes in das Gehäuse,
- Fig. 4a: eine Hinteransicht auf ein erfindungsgemäßes Gehäuse und ein erfindungsgemäßes Verbindungselement nach dem Reinstecken des Verbindungselementes in das Gehäuse,
- Fig. 4b: eine Hinteransicht auf ein erfindungsgemäßes Gehäuse und ein erfindungsgemäßes Verbindungselement in einer Montageposition,
- Fig. 4c: eine Hinteransicht auf ein erfindungsgemäßes Gehäuse und ein erfindungsgemäßes Verbindungselement in einer Betriebsposition ,
- Fig. 5a: eine Vorderansicht auf ein erfindungsgemäßes Rastelement einer Montageeinheit,
- Fig. 5b: eine Hinteransicht auf ein erfindungsgemäßes Rastelement einer Montageeinheit,
- Fig. 6a: eine mögliche Ausführungsform eines erfindungsgemäßen Verbindungselementes, und
- Fig. 6b: eine mögliche Ausführungsform eines erfindungsgemäßen Verbindungselementes.

In den nachfolgend beschriebenen Figuren werden für die gleichen technischen Merkmale auch von unterschiedlichen Ausführungsbeispielen die identischen Bezugszeichen verwendet.

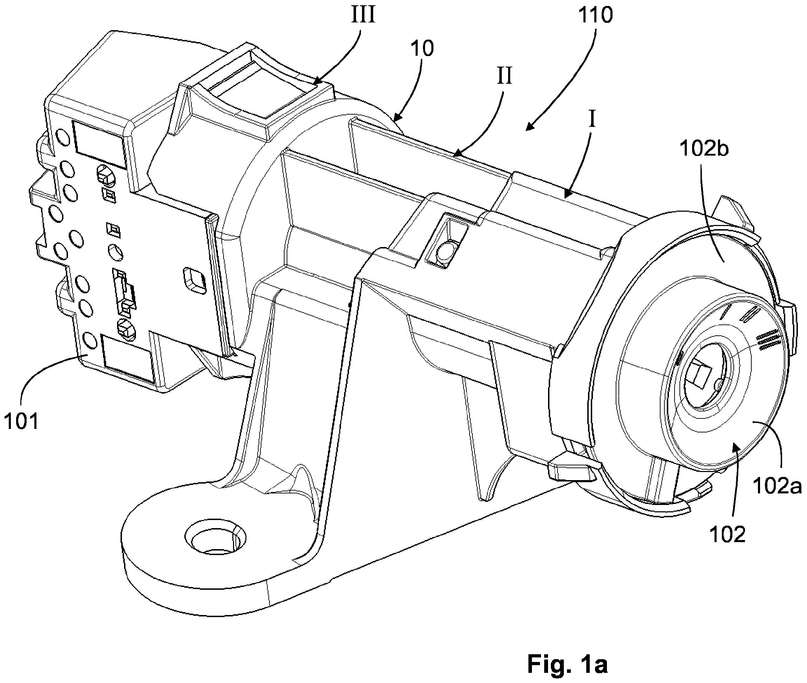

Die Figur 1a zeigt ein erfindungsgemäßes Schließmodul 110 in einem zusammengebauten Zustand, welches ein Gehäuse 10 für einen Anlassschalter 101 eines Kraftfahrzeuges, ein innerhalb des Gehäuses 10 verbautes und somit in der Ansicht der Figur 1a nicht sichtbares Verbindungselement 20 für ein Betätigungselement 102 des Anlassschalters 101 sowie das Betätigungselement 102 am Beispiel eines Schließzylinders mit einem innen liegenden drehbaren Teil 102a (Drehkern) und einem außen liegenden stationären Teil 102b (Zylindergehäuse). Ein Schließzylinder als ein Betätigungselement 102 ist in der Figur 1a lediglich beispielhaft dargestellt. Grundsätzlich ist es gleichwohl denkbar, dass das Betätigungselement 102 in Form eines Start-Stopp-Schalters ausgebildet sein kann. Das erfindungsgemäße Schließmodul 110 kann außerdem als ein Zündschloss bezeichnet werden.

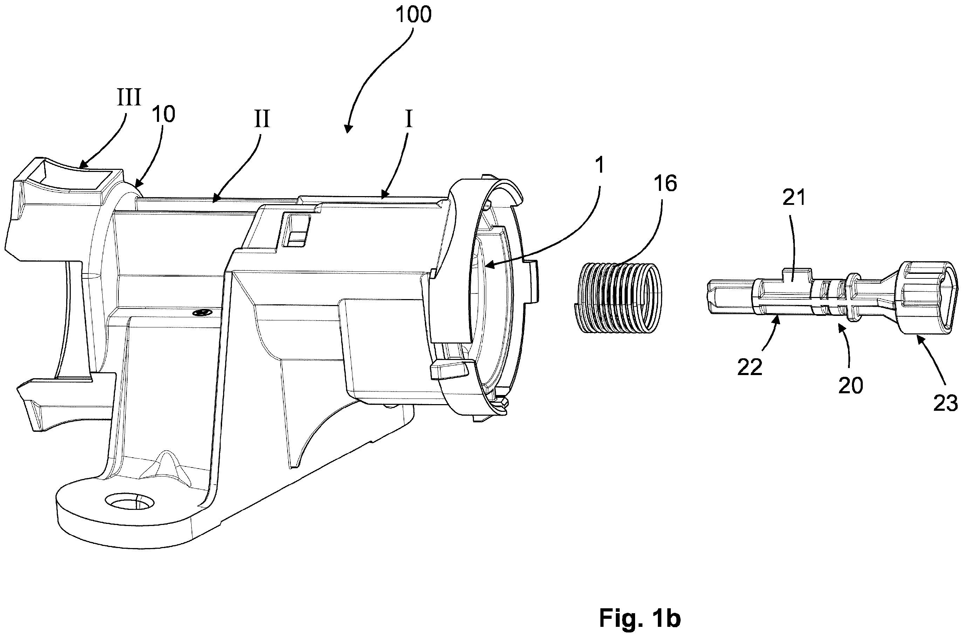

Die Figur 1b zeigt ein erfindungsgemäßes System 100 mit dem erfindungsgemäßen Gehäuse 10 für den Anlassschalter 101 und dem Verbindungselement 20 für das Betätigungselement 102 des Anlassschalters 101 vor dem Zusammenbau des Schließmoduls 110 aus der Figur 1a. Der Anlassschalter 101 wird hierzu von hinten in einem Anschlussabschnitt III des Gehäuses 10 aufgenommen. Mittig am Gehäuse 10 befindet sich ein Verbindungsabschnitt II, in welchem das Verbindungselement 20 für das Betätigungselement 102 des Anlassschalters 101 aufgenommen wird, an welchem wiederum das Betätigungselement 102, vorzugsweise das innen liegende, bewegbare Teil 102a des Betätigungselementes 102, befestigt wird. Das Verbindungselement 20 wird in der Figur 1b noch außerhalb des Gehäuses 10 gezeigt. Schließlich wird in einem Befestigungsabschnitt I des Gehäuses 10 das Betätigungselement 102 für den Anlassschalter 101 aufgenommen.

Das äußerste Ende des Betätigungselementes 102 bleibt nach der Befestigung am Gehäuse 10 zugänglich für einen Benutzer, um mit einem passenden Schlüssel oder im Besitzt eines autorisierten ID-Gebers den Anlassschalter 101 über das Betätigungselement 102 betätigen zu können. Der Anlassschalter 101 kann dabei einen Teil des Zündschlosses bzw. des Schließmoduls 110, bspw. zum Verriegeln einer Lenksäule, des Kraftfahrzeuges bilden. Das erfindungsgemäße Gehäuse 10 kann dabei seitlich an der Lenksäule oder auf der Mittelkonsole angeordnet sein. Zusammen bilden das Verbindungselement 20 und das Gehäuse 10 für den Anlassschalter 101 das erfindungsgemäße System 100 und mit dem Betätigungselement 102 das Schließmodul 110 in Sinne der Erfindung.

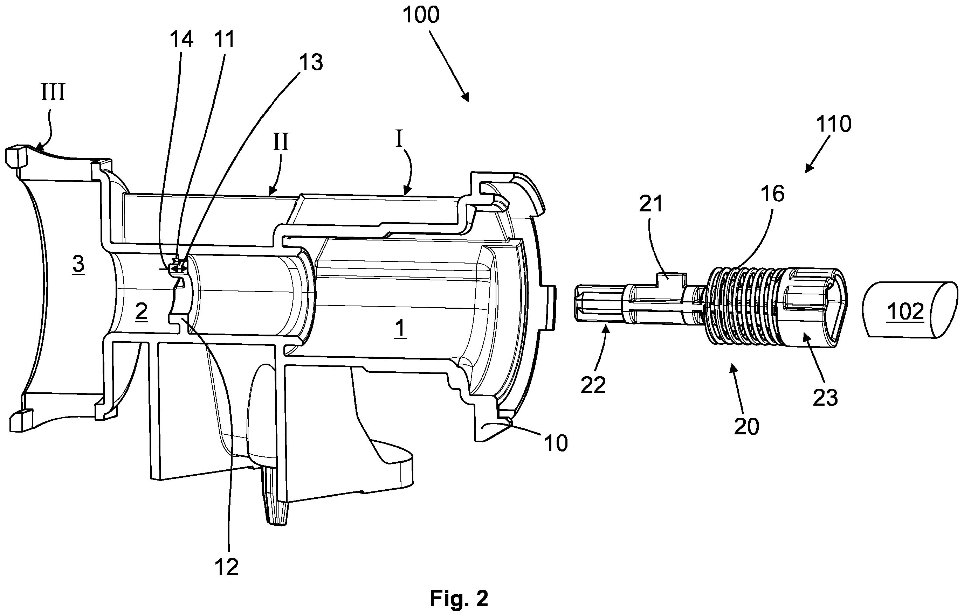

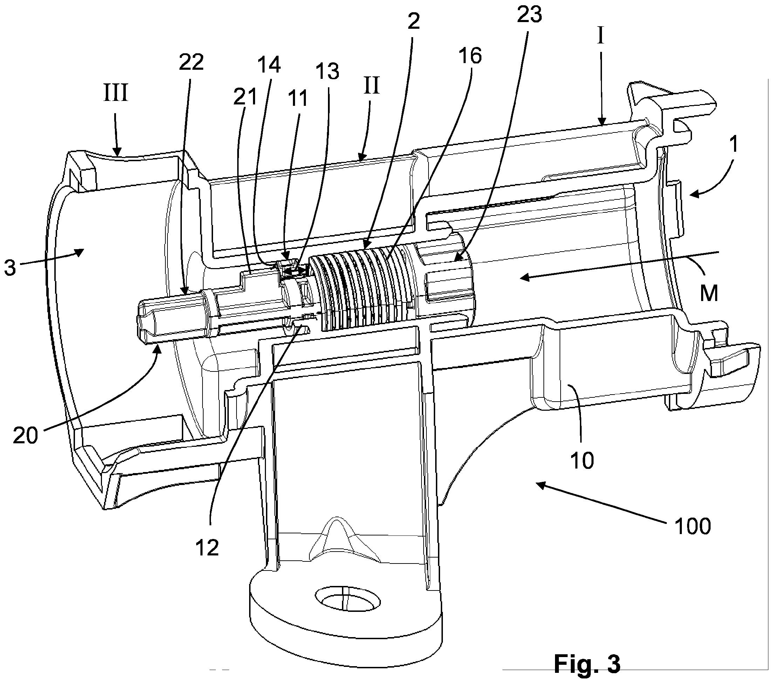

Die Figuren 2 und 3 zeigen das erfindungsgemäße Gehäuse 10 im Längsschnitt. Dabei ist es ersichtlich, dass innerhalb des Befestigungsabschnittes I des Gehäuses 10 eine Führungsöffnung 1 für das Betätigungselement 102 vorgesehen ist. Der Verbindungsabschnitt II des Gehäuses 10 weist eine Montageöffnung 2 für das Verbindungselement 20 auf. Der Anschlussabschnitt III weist eine Aufnahmeöffnung 3 für den Anlassschalter 101 auf. Die Montageöffnung 2 im Verbindungsabschnitt II ist dabei fluchtend mit der Führungsöffnung 1 im Befestigungsabschnitt I verbunden, sodass das Verbindungselement 20 durch die Führungsöffnung 1 und durch die Montageöffnung 2 zumindest zum Teil in die Aufnahmeöffnung 3 im Anschlussabschnitt III einführbar ist, wie es die Figur 3 zeigt.

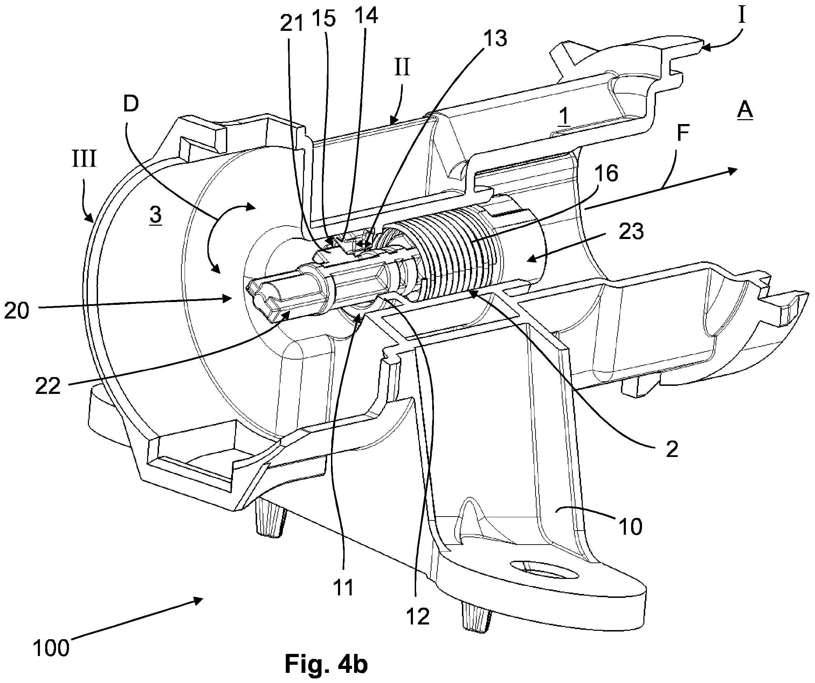

Ferner zeigen die Figuren 2 und 3 eine erfindungsgemäße Montageeinheit 11, die im Verbindungsabschnitt II des Gehäuses 10 integriert ist. Die Montageeinheit 11 ist dazu ausgelegt, das Verbindungselement 20 in einer Montageposition A innerhalb des Gehäuses 10 form- und/oder kraftschlüssig am Verbindungsabschnitt II des Gehäuses 10 zu fixieren. Die Montageposition A des Verbindungselementes 20 ist in der Figur 4b gezeigt. Integriert bedeutet dabei, dass die Montageeinheit 11 an der Montageöffnung 2 des Verbindungsabschnittes II des Gehäuses 10 ausgebildet ist und zumindest zum Teil die Montageöffnung 2 innerhalb des Verbindungsabschnittes II des Gehäuses 10 definiert. Dabei stellt die Montageeinheit 11 einen Teil des Verbindungsabschnittes II des Gehäuses 10 dar, welcher sowohl zur Befestigung des Verbindungselementes 20 für das Betätigungselement 102 des Anlassschalters 101 am Gehäuse 10 dient, als auch im normalen Betrieb des Schließmoduls 110 als ein integraler Bestandteil des Gehäuses 10 bleibt. Dabei ist es denkbar, dass die Montageeinheit 11 im monolithischen Körper des Gehäuses 10 materialeinheitlich und/oder monolithisch mit dem Verbindungsabschnitt II ausgeformt, bspw. mithilfe eines Spritzgussverfahrens, und/oder dauerhaft, bspw. form und/oder kraftschlüssig mit dem Verbindungsabschnitt II verbunden sein kann.

In der Figur 2 ist eine Montagerichtung M für das Verbindungselement 20 und für das Betätigungselement 102 des Anlassschalters 101 gezeigt. Das Verbindungselement 20 und das Betätigungselement 102 erstrecken sich entlang der Montagerichtung M zwecks Montage und nach dem Befestigen am Gehäuse 10 entlang einer Längsachse des Gehäuses 10, die entlang der Montagerichtung M verläuft.

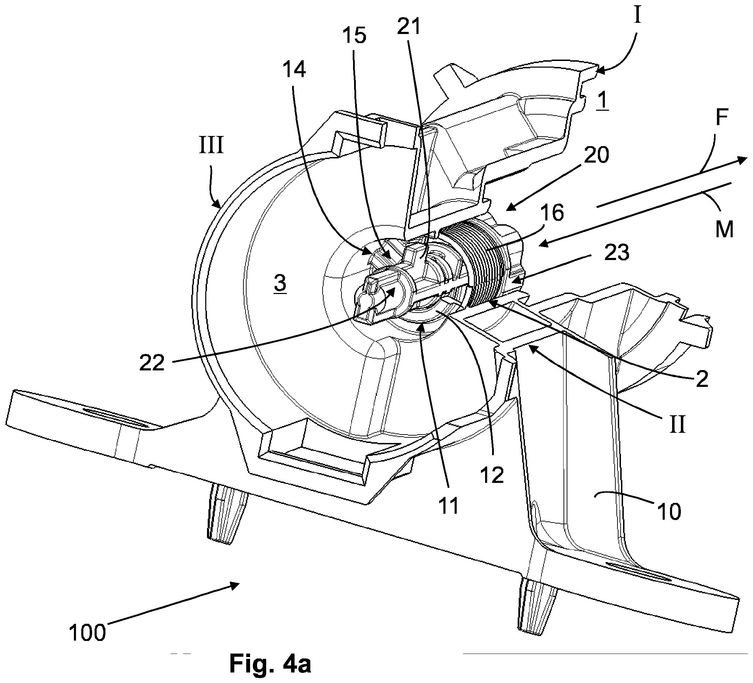

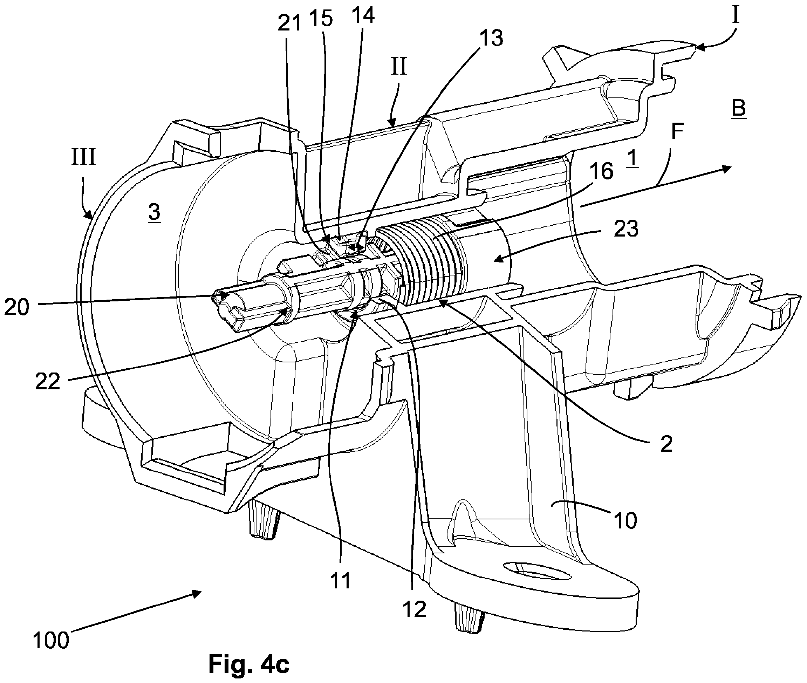

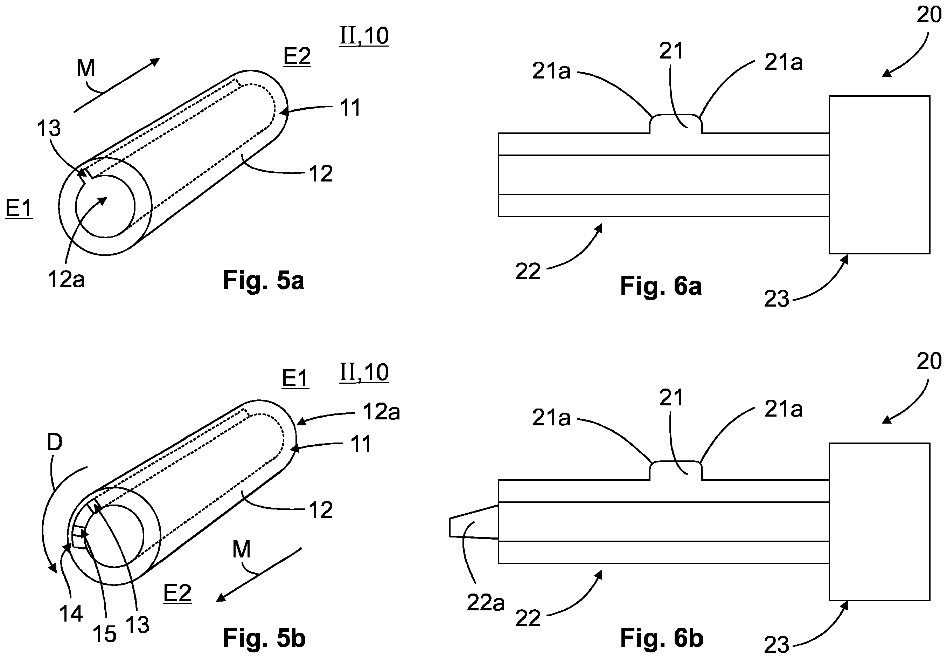

Anhand der Figuren 4a, 4b und 4c sowie der Figuren 5a und 5b wird der Erfindungsgedanke erklärt. Gemäß der Erfindung dient die Montageeinheit 11 für eine vorübergehende Fixierung, vorzugsweise eine Verrastung, des Verbindungselementes 20 am Gehäuse 10. Vorzugsweise ist die Fixierung form- und/oder kraftschlüssig, also lösbar und mit Hilfe eines Bajonettverschlusses realisiert. Die Montageeinheit 11 verbleibt als ein integraler Bestandteil des Gehäuses 10 auch nach der Montage sämtlicher Komponenten des Schließmoduls 110, wie des Betätigungselementes 102 und des Anlassschalters 101, am Gehäuse 10. Zugleich kann das Verbindungselement 20 nach dem Fixieren in einer Montageposition A (s. Figur 4b) innerhalb des Gehäuses 10, insbesondere innerhalb des Montageabschnittes II des Gehäuses 10, zumindest vorübergehend als eine Montagehilfe zum Befestigen des Betätigungselementes 102 am Gehäuse 10 dienen.

Nach dem Fixieren des Verbindungselementes 20 in der Montageposition A kann das Betätigungselement 102 entlang der Montagerichtung M in das Gehäuse 10 eingeführt werden und am Verbindungselement 20 befestigt werden. Dabei umfasst das Betätigungselement 102 ein innen liegendes, bewegbares Teil 102a (bspw. einen Drehkern eines Schließzylinders oder einen Schaltkopf eines Start-Stopp-Schalters), welches am Verbindungselement 20 gekoppelt wird. Zudem umfasst das Betätigungselement 102 ein außen liegendes, stationäres Teil 102b (ein Zylindergehäuse) umfassen, welches am Gehäuse 10 befestigt wird.

Sind das Betätigungselement 102, bspw. über das bewegbare Teil 102a bzw. über den drehbaren Kern des Schließzylinders, und das Verbindungselement 20 miteinander gekoppelt, schiebt das Betätigungselement 102 das Verbindungselement 20 aus der Montageposition A heraus in Richtung zum Anlassschalter 101, wie es die Figur 4c zeigt. Somit wird das Verbindungselement 20 von der Montageeinheit 11 losgelöst und zumindest zum Teil in die Aufnahmeöffnung 3 des Anschlussabschnittes III des Gehäuses 10 hineingeschoben. Anschließend stellt das Betätigungselement 102 mit seinem äußeren, stationären Teil 102b eine feste Verbindung zum Gehäuse 10 her. Das bewegbare Teil 102a des Betätigungselementes 102 bleibt aber weiterhin mit dem Verbindungselement 20 gekoppelt.

Wenn das Verbindungselement 20 in einer Betriebsposition B angekommen ist, wie es die Figur 4c zeigt, ist das Verbindungselement 20 losgelöst von der Montageinheit 11 und somit frei drehbar. In der Betriebsposition B kann das Verbindungselement 20 im Betrieb des Anlassschalters 101 die Wirkverbindung zwischen dem Betätigungselement 102 und dem Anlassschalter 101 herstellen.

Mit anderen Worten agiert das Verbindungselement 20 in der Montageposition A (s. Figur 4b) zunächst als eine Montagehilfe und in der Betriebsposition B (s. Figur 4c) als ein Übertragungsglied zum Herstellen einer Wirkverbindung zwischen dem Betätigungselement 102 und dem Anlassschalter 101.

Die Figuren 5a und 5b zeigen außerdem, dass die Montageeinheit 11 ein zumindest zum Teil zylinder- und/oder ringförmiges Rastelement 12 aufweist, welches mit einem Gegenrastelement 21 des Verbindungselementes 20 zum form- und/oder kraftschlüssigen Fixieren des Verbindungselementes 20 an der Montageeinheit 11 zusammenwirkt.

Das Rastelement 12 weist eine entlang der Montagerichtung M ausgerichtete und sich von einem vorderen Ende E1 bis zu einem hinteren Ende E2 der Montageeinheit 11 erstreckende Führungsnut 13 in Form eines Längsschlitzes auf. In der Führungsnut 13 ist ein Gegenrastelement 21 des Verbindungselementes 20 beim Einstecken des Verbindungselementes 20 in die Montageeinheit 11 führbar. Das Gegenrastelement 21 des Verbindungselementes 20 kann dabei in Form einer radial abstehenden Rastnase bzw. eines Nockens ausgebildet sein. Beim Einstecken in die Führungsnut 13 kann der Werker somit eine haptische Rückmeldung über die richtige Ausrichtung des Verbindungselementes 20 innerhalb der Montageeinheit 11 erhalten und somit intuitiv bei der Montage begleitet werden.

Am hinteren Ende E2 der Montageeinheit 11 und am Ende der Führungsnut 13 ist eine radial zur Montagerichtung M des Betätigungselementes 102 am Gehäuse 10 verlaufende Montagekulisse 14 ausgebildet, in der das Gegenrastelement 21 des Verbindungselementes 20 durch ein Drehen in eine Drehrichtung D nach dem Einstecken des Verbindungselementes 20 in die Montageeinheit 11 führbar ist, bis eine form- und/oder kraftschlüssige Verbindung des Verbindungselementes 20 mit der Montageeinheit 11 hergestellt ist. Somit kann eine einfache Steck-Drehbewegung zum Fixieren des Verbindungselementes 20 an der Montageeinheit 11 ausgeführt werden. Am Anschlag der Montagekulisse 14, weg von der Führungsnut 13 ist eine Einbuchtung 15 vorgesehen, in der das Gegenrastelement 21 des Verbindungselementes 20 form- und/oder kraftschlüssig einschnappen kann. Die Einbuchtung 15 signalisiert die erreichte Montageposition A des Verbindungselementes 20 an der Montageeinheit 11 durch ein Entspannen eines Federelementes 16.

Wie die Figuren 1b bis 4c zeigen, ist das Federelement 16 zwischen der Montageeinheit 11 und dem Verbindungselement 20 vorgesehen, welches beim Reinstecken des Verbindungselementes 20 in die Montageeinheit 11 vorgespannt werden kann. Nach dem Verdrehen des Verbindungselementes 20 in der Führungskulisse 14 der Montageeinheit 11 und nachdem Erreichen der Einbuchtung 15 kann die zwischengespeicherte Federkraft F im Federelement 16 bewirken, dass das Verbindungselement 20 in der Einbuchtung 15 zur Auflage kommt.

Die erfindungsgemäße Montageeinheit 11 und das erfindungsgemäße Verbindungselement 20 bringen mehrere Vorteile mit sich. Zum einen erweitert die Montageeinheit 11 die Funktionalität des Verbindungselementes 20, sodass das Verbindungselement 20 zunächst, zumindest vorübergehend als eine Montagehilfe agiert und danach dauerhaft als Übertragungsglied zum Herstellen einer Wirkverbindung zwischen dem Betätigungselement 102 und dem Anlassschalter 101 dient. Zum anderen wird durch die Montageeinheit 11 die Befestigung des Anlassschalters 101, des Betätigungselementes 102 für den Anlassschalter 101 und des Verbindungselementes 20 für das Betätigungselement 102 am Gehäuse 10 (d. h. der Zusammenbau des Schließmoduls 110) erheblich erleichtert, weil das Verbindungselement 20 sowie die Montageeinheit 11 dauerhaft im Gehäuse 10 verbleiben können, weil zusätzliche Montagehilfen für das Betätigungselement 102 entfallen und weil sowohl das Verbindungselement 20, als auch das Betätigungselement 102 einhändig am Gehäuse 10 befestigt werden können.

Wie die Figuren 6a und 6b neben den Figuren 1 bis 3 zeigen, ist das erfindungsgemäße Verbindungselement 20 mit einem Gegenrastelement 21 ausgeführt, welches beim Einführen des Verbindungselementes 20 in das Gehäuse 10 mit der Montageeinheit 11 zusammengewirkt. Das Gegenrastelement 21 ist im dargestellten Ausführungsbeispiel der Erfindung in Form einer Rastnase bzw. in Form eines Schlüsselbartes am länglichen Verbindungselement 20 ausgebildet.

Wie die Figuren 6a und 6b ferner zeigen, weist das Verbindungselement 20 von einer Seite, die dem Anlassschalter 101 zugewandt wird, einen stiftartigen Betätigungsabschnitt 22 und von einer Seite, die dem Betätigungselement 102 zugewandt wird, eine schalenförmige Befestigungsaufnahme 23 zum Befestigen des inneren, bewegbaren Teils des Betätigungselementes 102.

Wie die Figur 6a zudem zeigt, weist das Gegenrastelement 21 mindestens eine Führungshilfe 21a, insbesondere in Form von abgerundeten Ecken 21a, auf. Somit kann das Gegenrastelement 21 einfach in der Führungsnut 13 der Montageeinheit 11 aufgenommen werden. Dadurch kann die Fixierung des Verbindungselementes 20 am Gehäuse 10 erleichtert werden.

Wie die Figur 6b weiterhin zeigt, kann der Betätigungsabschnitt 22 des Verbindungselementes 20 eine dem Anlassschalter 101 zugewandte, im Wesentlichen konusförmige Verjüngung 22a aufweisen. Durch die Verjüngung 22a kann die Verbindung zum Anlassschalter 101 beim Zusammenbau des Schließmoduls 110 leichter hergestellt werden. Nachdem das Verbindungselement 20 in der Montageposition A an der Montageeinheit 11 fixiert ist, hat der Werker nur das Betätigungselement 102 in der Hand und muss über das Betätigungselement 102 das Verbindungselement 20 gezielt zum Anlassschalter 101 ausrichten. Über die Verjüngung 22a kann der Werker eine Verbindung zum Anlassschalter 101 einfach herstellen.

Erfindungsgemäß wird somit ein System 100 mit einem Gehäuse 10 und einem Verbindungselement 20 bereitgestellt, die über die Montageeinheit 11 einen, vorzugsweise federbelasteten, Bajonettverschluss bilden. Mithilfe eines Bajonettverschlusses kann eine einfache Fixierung des Verbindungselementes 20 am Gehäuse 10 und somit ein einfacher Zusammenbau des Systems 100 ermöglicht werden. Zum Herstellen einer Bajonettverbindung braucht ein Werker nur eine Hand. Ein Bajonettverschluss kann nicht nur einfach hergestellt aber auch einfach gelöst werden, um das Verbindungselement 20 in die Betriebsposition B zu überführen und ein Verkanten des Verbindungselementes 20 innerhalb des Gehäuses 10 zu vermeiden. Ein federbelasteter Bajonettverschluss ist vorzugsweise selbstsichernd.

Ein Verfahren im Sinne der Erfindung zum Fixieren des Verbindungselementes 20 am Gehäuse 10 umfasst folgende Schritte:
a) Einstecken des Verbindungselementes 20 in die Montageeinheit 11 des Gehäuses 10 entlang der Montagerichtung M,
b) Drehen des Verbindungselementes 20 in die Drehrichtung D bis eine form- und/oder kraftschlüssige Verbindung mit der Montageeinheit 11 hergestellt werden kann.

Somit kann durch eine Steck-Dreh-Bewegung eine einfache, schnelle und unkomplizierte Fixierung des Verbindungselementes 20 am Gehäuse 10 ermöglicht werden, die mit nur einer Hand ausgeführt werden kann.

Im Schritt a) kann das Verbindungselement 20 vorzugsweise entgegen einer Federkraft F des Federelementes 16 eingesteckt werden, um eine Federenergie zwischen zu speichern, die nach dem Loslassen des Verbindungselementes 20 zum Einschnappen des Verbindungselementes 20 in der Montageposition A in der Einbuchtung 15 der Montageeinheit 11 genutzt werden kann. Somit kann die Verrastung des Verbindungselementes 20 innerhalb des Gehäuses 10 unterstützt durch die Federkraft F erfolgen, nachdem der Werker eine Steck-Drehbewegung ausgeführt hat.

Weiterhin kann das Verfahren mindestens einen weiteren Schritt aufweisen:
c) Zurückbewegen des Verbindungselementes 20 durch Entspannen des Federelementes 16 der Montageeinheit 11 bis das Verbindungselement 20 in der Einbuchtung 15 der Montageeinheit 11 aufgenommen wird, wodurch eine form-und/oder kraftschlüssige Verbindung des Verbindungselementes 20 mit der Montageeinheit 11 hergestellt wird.

Somit kann die Fixierung des Verbindungselementes 20 am Gehäuse 10 und der Zusammenbau des Schließmoduls 110 erheblich erleichtert werden. Die Montagezeit kann dabei deutlich reduziert werden.

Die voranstehende Erläuterung der Ausführungsformen beschreibt die vorliegende Erfindung ausschließlich im Rahmen von Beispielen. Selbstverständlich können einzelne Merkmale der vorliegenden Erfindung, sofern technisch sinnvoll, frei miteinander kombiniert werden, ohne den Rahmen der vorliegenden Erfindung/Ansprüche zu verlassen.

### Bezuaszeichenliste

- 100: System

- 110: Schließmodul

- 10: Gehäuse
- 11: Montageeinheit
- 12: Rastelement
- 13: Führungsnut
- 14: Montagekulisse
- 15: Einbuchtung
- 16: Federelement

- 20: Verbindungselement
- 21: Gegenrastelement
- 21a: Führungshilfe
- 22: Betätigungsabschnitt
- 22a: Verjüngung
- 23: Befestigungsaufnahme

- 101: Anlassschalter
- 102: Betätigungselement
- 102a: bewegbares Teil
- 102b: stationäres Teil

- I: Befestigungsabschnitt
- II: Verbindungsabschnitt
- III: Anschlussabschnitt
- 1: Führungsöffnung
- 2: Montageöffnung
- 3: Aufnahmeöffnung

- A: Montageposition
- B: Betriebsposition

- E1: vorderes Ende der Montageeinheit
- E2: hinteres Ende der Montageeinheit

- F: Federkraft

- M: Montagerichtung
- D: Drehrichtung

## Patentansprüche

1. Gehäuse (10) für einen Anlassschalter (101) eines Kraftfahrzeuges, aufweisend:
einen Befestigungsabschnitt (I) zum Aufnehmen eines Betätigungselementes (102) für den Anlassschalter (101) innerhalb des Gehäuses (10),
wobei der Befestigungsabschnitt (I) eine Führungsöffnung (1) für das Betätigungselement (102) aufweist,
einen Verbindungsabschnitt (II) zum Aufnehmen eines Verbindungselementes (20), an welchem das Betätigungselement (102) befestigbar ist, innerhalb des Gehäuses (10),
wobei der Verbindungsabschnitt (II) eine Montageöffnung (2) für das Verbindungselement (20) aufweist,
und einen Anschlussabschnitt (III) zum Aufnehmen des Anlassschalters (101) innerhalb des Gehäuses (10),
wobei der Anschlussabschnitt (III) eine Aufnahmeöffnung (3) aufweist, die über die Montageöffnung (2) im Verbindungsabschnitt (II) fluchtend mit der Führungsöffnung (1) im Befestigungsabschnitt (I) verbunden ist, sodass das Verbindungselement (20) durch die Führungsöffnung (1) und durch die Montageöffnung (2) zumindest zum Teil in die Aufnahmeöffnung (3) im Anschlussabschnitt (III) einführbar ist,
wobei im Verbindungsabschnitt (II) eine Montageeinheit (11) integriert ist, die dazu ausgelegt ist, das Verbindungselement (20) in einer Montageposition (A) innerhalb des Gehäuses (10) form- und/oder kraftschlüssig am Verbindungsabschnitt (II) zu fixieren,
**dadurch gekennzeichnet,**
**dass** die Montageeinheit (11) ein zumindest zum Teil zylinder- und/oder ringförmiges Rastelement (12) aufweist, welches mit einem Gegenrastelement (21) des Verbindungselementes (20) zum form- und/oder kraftschlüssigen Fixieren des Verbindungselementes (20) am Verbindungsabschnitt (II) zusammenwirkt.

2. Gehäuse (10) nach einem der vorhergehenden Ansprüche,
**dadurch gekennzeichnet,**
**dass** die Montageeinheit (11), insbesondere das Rastelement (12), eine entlang einer Montagerichtung (M) des Betätigungselementes (102) am Gehäuse (10) ausgerichtete Führungsnut (13) aufweist, in der ein Gegenrastelement (21) des Verbindungselementes (20) beim Einstecken des Verbindungselementes (20) in die Montageeinheit (11) führbar ist.

3. Gehäuse (10) nach einem der vorhergehenden Ansprüche,
**dadurch gekennzeichnet,**
**dass** die Montageeinheit (11), insbesondere das Rastelement (12), eine radial zu einer Montagerichtung (M) des Betätigungselementes (102) am Gehäuse (10) verlaufende Montagekulisse (14) aufweist, in der ein Gegenrastelement (21) des Verbindungselementes (20) durch ein Drehen des Verbindungselementes (20) nach dem Einstecken in die Montageeinheit (11) führbar ist, bis eine form- und/oder kraftschlüssige Verbindung des Verbindungselementes (20) mit der Montageeinheit (11) hergestellt ist
und/oder dass die Montageeinheit (11), insbesondere die Montagekulisse (14), eine entlang einer Montagerichtung (M) des Betätigungselementes (102) am Gehäuse (10) ausgerichtete Einbuchtung (15) aufweist, in der ein Gegenrastelement (21) des Verbindungselementes (20) form- und/oder kraftschlüssig zur Auflage bringbar ist.

4. Gehäuse (10) nach einem der vorhergehenden Ansprüche,
**dadurch gekennzeichnet,**
**dass** die Montageeinheit (11) ein Federelement (16) aufweist, um das Verbindungselement (20) beim Einführen in die Montageeinheit (11) mit einer Federkraft (F) in eine entgegengesetzte Richtung zu einer Montagerichtung (M) des Betätigungselementes (102) am Gehäuse (10) zu beaufschlagen.

5. System (100) aufweisend:
ein Gehäuse (10) für einen Anlassschalter (101) eines Kraftfahrzeuges nach einem der vorhergehenden Ansprüche
und ein Verbindungselement (20) für ein Betätigungselement (102) des Anlassschalters (101), an welchem das Betätigungselement (102) befestigbar ist,
wobei das Verbindungselement (20) in einer Montageposition (A) innerhalb des Gehäuses (10) form- und/oder kraftschlüssig am Verbindungsabschnitt (II) des Gehäuses (10) fixierbar und in einer Betriebsposition (B) innerhalb des Gehäuses (10) frei drehbar ist.

6. System (100) nach Anspruch 5,
**dadurch gekennzeichnet,**
**dass** das Verbindungselement (20) ein Gegenrastelement (21) aufweist, welches beim Einführen des Verbindungselementes (20) in das Gehäuse (10) mit der Montageeinheit (11) zusammengewirkt, um das Verbindungselement (20) in der Montageposition (A) innerhalb des Gehäuses (10) form- und/oder kraftschlüssig am Verbindungsabschnitt (II) des Gehäuses (10) zu fixieren.

7. System (100) nach Anspruch 5 oder 6,
**dadurch gekennzeichnet,**
**dass** das Verbindungselement (20) einen Betätigungsabschnitt (22) zum Betätigen des Anlassschalters (101) und eine Befestigungsaufnahme (23) zum Befestigen des Betätigungselementes (102) aufweist,
wobei insbesondere der Betätigungsabschnitt (22) eine dem Anlassschalter (101) zugewandte, im Wesentlichen konusförmige Verjüngung (22a) aufweist.

8. System (100) nach einem der vorhergehenden Anspruch 5 bis 7,
**dadurch gekennzeichnet,**
**dass** das Gegenrastelement (21) mindestens eine Führungshilfe (21a), insbesondere in Form von abgerundeten Ecken, aufweist.

9. System (100) nach einem der vorhergehenden Anspruch 5 bis 8,
**dadurch gekennzeichnet,**
**dass** das Verbindungselement (20), insbesondere das Gegenrastelement (21), und die Montageeinheit (11) einen, vorzugsweise federbelasteten, Bajonettverschluss bilden.

10. Schließmodul (110) aufweisend:
ein System (100) nach einem der vorhergehenden Ansprüche 5 bis 9,
und ein Betätigungselement (102) für den Anlassschalter (101),
wobei das Betätigungselement (102) im Befestigungsabschnitt (I) des Gehäuses (10) innerhalb des Gehäuses (10) aufnehmbar ist.

11. Schließmodul (110) nach Anspruch 10,
**dadurch gekennzeichnet,**
**dass** das Betätigungselement (102) in Form eines Schließzylinders oder eines Start-Stopp-Schalters ausgebildet ist.

12. Schließmodul (110) nach Anspruch 10 oder 11,
**dadurch gekennzeichnet,**
**dass** mindestens ein Anlassschalter (101) für einen Anlasser eines Kraftfahrzeuges in Form eines Druckschalters, eines Schiebeschalters, eines Drehschalters oder eines Stufenschalters vorgesehen ist, wobei der Anlassschalter (101) im Anschlussabschnitt (III) des Gehäuses (10) innerhalb des Gehäuses (10) aufnehmbar ist.

13. Verfahren zum Fixieren eines Verbindungselementes (20) für ein Betätigungselement (102) eines Anlassschalters (101) eines Kraftfahrzeuges in einer Montageposition (A) innerhalb eines Gehäuses (10) für den Anlassschalter (101), wobei das Gehäuse (10) nach einem der vorhergehenden Ansprüche 1 bis 4 ausgeführt ist,
**wobei das Verfahren folgende Schritte aufweist:**
a) Einstecken des Verbindungselementes (20) in eine Montageeinheit (11) des Gehäuses (10),
b) Drehen des Verbindungselementes (20) bis eine form- und/oder kraftschlüssige Verbindung mit der Montageeinheit (11) hergestellt werden kann.

14. Verfahren nach Anspruch 13,
**dadurch gekennzeichnet,**
**dass** im Schritt a) das Verbindungselement (20) entgegen einer Federkraft (F) eines Federelementes (16) eingesteckt wird
und/oder dass das Verfahren mindestens einen weiteren Schritt aufweist:
c) Zurückbewegen des Verbindungselementes (20) durch Entspannen eines Federelementes (16) der Montageeinheit (11) bis das Verbindungselement (20) in einer Einbuchtung (15) der Montageeinheit (11) aufgenommen wird, wodurch eine form- und/oder kraftschlüssige Verbindung des Verbindungselementes (20) mit der Montageeinheit (11) hergestellt wird.

## Claims

1. Housing (10) for a starter switch (101) of a motor vehicle, comprising:
a fixing portion (I) for accommodating an actuating element (102) for the starter switch (101) within the housing (10),
wherein the fixing portion (I) comprises a guide opening (1) for the actuating element (102),
a connecting portion (II) for receiving a connecting element (20), to which the actuating element (102) can be attached, within the housing (10),
wherein the connecting portion (II) comprises a mounting opening (2) for the connecting element (20),
and an adapter portion (III) for accommodating the starter switch (101) inside the housing (10),
wherein the adapter portion (III) has a receiving opening (3) which is connected via the mounting opening (2) in the connecting portion (II) in alignment with the guide opening (1) in the fixing portion (I), so that the connecting element (20) can be inserted through the guide opening (1) and through the mounting opening (2) at least partially into the receiving opening (3) in the adapter portion (III),
wherein an assembly unit (11) is integrated in the connecting portion (II), which is designed to fix the connecting element (20) in an assembly position (A) within the housing (10) in a positive and/or non-positive manner to the connecting portion (II),
**characterized in that,**
the assembly unit (11) has an at least partially cylindrical and/or annular latching element (12) which interacts with a mating latching element (21) of the connecting element (20) for fixing the connecting element (20) in a form-fitting and/or force-fitting manner on the connecting portion (II).

2. Housing (10) according to one of the previous claims,
**characterized in that,**
the assembly unit (11), in particular the latching element (12), has a guide groove (13) which is aligned along an assembly direction (M) of the actuating element (102) on the housing (10) and in which a mating latching element (21) of the connecting element (20) can be guided when the connecting element (20) is inserted into the assembly unit (II).

3. Housing (10) according to one of the previous claims,
**characterized in that,**
the assembly unit (11), in particular the latching element (12), has an assembly slot (14) which runs radially with respect to an assembly direction (M) of the actuating element (102) on the housing (10) and in which a mating latching element (21) of the connecting element (20) can be guided by rotating the connecting element (20) after insertion into the assembly unit (11) until a form-fitting and/or force-fitting connection of the connecting element (20) to the assembly unit (11) is produced and/or **in that** the assembly unit (11), in particular the assembly slot (14), has an indentation (15) which is aligned along an assembly direction (M) of the actuating element (102) on the housing (10) and in which a mating latching element (21) of the connecting element (20) can be brought to rest in a form-fitting and/or force-locking manner.

4. Housing (10) according to one of the previous claims,
**characterized in that,**
the assembly unit (11) comprises a spring element (16) in order to apply a spring force (F) to the connecting element (20) during insertion into the assembly unit (11) in a direction opposite to a mounting direction (M) of the actuating element (102) on the housing (10).

5. System (100) comprising:
a housing (10) for a starter switch (101) of a motor vehicle according to any of the previous claims
and a connecting element (20) for an actuating element (102) of the starter switch (101) to which the actuating element (102) can be attached,
wherein the connecting element (20) in an assembly position (A) within the housing (10) can be fixed positively and/or non-positively to the connecting portion (II) of the housing (10) and in an operating position (B) can be freely rotated within the housing (10).

6. System (100) according to claim 5,
**characterized in that,**
the connecting element (20) has a mating latching element (21) which, when the connecting element (20) is inserted into the housing (10), interacts with the assembly unit (11) in order to fix the connecting element (20) in the assembly position (A) within the housing (10) in a form-fitting and/or force-fitting manner on the connecting section (II) of the housing (10).

7. System (100) according to claim 5 or 6,
**characterized in that,**
the connecting element (20) has a fixing portion (22) for actuating the starter switch (101) and a fastening receptacle (23) for fastening the actuating element (102), wherein in particular the actuating portion (22) has a substantially conical taper (22a) facing the starter switch (101).

8. System (100) according to any of the previous claims 5 to 7,
**characterized in that,**
the mating latching element (21) has at least one guide aid (21a), in particular in the form of rounded corners.

9. System (100) according to any of the previous claims 5 to 8,
**characterized in that,**
the connecting element (20), in particular the mating latching element (21), and the assembly unit (11) form a preferably spring-loaded bayonet lock.

10. Locking module (110) comprising :
a system (100) according to any one of the preceding claims 5 to 9,
and an actuating element (102) for the starter switch (101),
wherein the actuating element (102) is receivable in the fixing portion (I) of the housing (10) within the housing (10).

11. Locking module (110) according to claim 10,
**characterized in that,**
the actuating element (102) is designed in the form of a closing cylinder or a start-stop switch.

12. Locking module (110) according to claim 10 or 11,
**characterized in that,**
at least one starter switch (101) is provided for a starter of a motor vehicle in the form of a pressure switch, a slide switch, a rotary switch or a step switch, the starter switch (101) being receivable in the adapter portion (III) of the housing (10) within the housing (10).

13. Method for fixing a connecting element (20) for an actuating element (102) of a starter switch (101) of a motor vehicle in an assembly position (A) within a housing (10) for the starter switch (101), wherein the housing (10) is designed according to one of the preceding claims 1 to 4,
**the method comprising the following steps:**
a) Inserting the connecting element (20) into an assembly unit (11) of the housing (10),
b) turning the connecting element (20) until a positive and/or non-positive connection with the assembly unit (11) can be established.

14. Method according to claim 13,
**characterized in that,**
in step a) the connecting element (20) is inserted against a spring force (F) of a spring element (16)
and/or that the method comprises at least one further step:
c) moving back the connecting element (20) by relaxing a spring element (16) of the assembly unit (11) until the connecting element (20) is received in a indentation (15) of the assembly unit (11), whereby a positive and/or non-positive connection of the connecting element (20) with the assembly unit (11) is produced.

## Revendications

1. Boîtier (10) pour un commutateur de démarrage (101) d'un véhicule automobile, comprenant :
une partie de fixation (I) destinée à recevoir un élément d'actionnement (102) pour le commutateur de démarrage (101) à l'intérieur du boîtier (10),
dans lequel la partie de fixation (I) présente une ouverture de guidage (1) pour l'élément d'actionnement (102),
une partie de raccordement (II) destinée à recevoir un élément de raccordement (20), auquel l'élément d'actionnement (102) peut être fixé, à l'intérieur du boîtier (10),
dans lequel la partie de raccordement (II) présente une ouverture de montage (2) pour l'élément de raccordement (20),
et une partie terminale (III) pour le logement du commutateur de démarrage (101) à l'intérieur du boîtier (10),
dans lequel la partie terminale (III) présente une ouverture de réception (3) qui est reliée par l'ouverture de montage (2) de la partie de raccordement (II) en alignement avec l'ouverture de guidage (1) de la partie de fixation (I), de sorte que l'élément de raccordement (20) peut être inséré à travers l'ouverture de guidage (1) et à travers l'ouverture de montage (2) au moins partiellement dans l'ouverture de réception (3) de la partie de terminale (III),
dans lequel une unité de montage (11) est intégrée dans la partie de raccordement (II), qui est conçue pour fixer l'élément de raccordement (20) dans une position de montage (A) à l'intérieur du boîtier (10) de manière positive et/ou non positive à la partie de raccordement (II),
**caractérisé en ce que,**
l'unité de montage (11) présente un élément d'encliquetage (12) au moins partiellement cylindrique et/ou annulaire qui coopère avec un élément d'encliquetage complémentaire (21) de l'élément de raccordement (20) pour fixer l'élément de raccordement (20) par complémentarité de forme et/ou par force sur la partie de raccordement (II).

2. Boîtier (10) selon l'une des revendications précédentes,
**caractérisé en ce que**,
l'unité de montage (11), en particulier l'élément d'encliquetage (12), présente une rainure de guidage (13) qui est orientée le long d'une direction de montage (M) de l'élément d'actionnement (102) sur le boîtier (10) et dans laquelle un élément d'encliquetage complémentaire (21) de l'élément de raccordement (20) peut être guidé lorsque l'élément de raccordement (20) est inséré dans l'unité de montage (11).

3. Boîtier (10) selon l'une des revendications précédentes,
**caractérisé en ce que,**
l'unité de montage (11), en particulier l'élément d'encliquetage (12), présente une fente de montage (14) qui s'étend radialement par rapport à une direction de montage (M) de l'élément d'actionnement (102) sur le boîtier (10) et dans laquelle un élément d'encliquetage complémentaire (21) de l'élément de raccordement (20) peut être guidé par rotation de l'élément de raccordement (20) après l'insertion dans l'unité de montage (11) jusqu'à ce qu'une liaison par complémentarité de formes et/ou par force de l'élément de raccordement (20) avec l'unité de montage (11) soit réalisée
et/ou **en ce que** l'unité de montage (11), en particulier le fente de montage (14), présente un renfoncement (15) qui est orienté le long d'une direction de montage (M) de l'élément d'actionnement (102) sur le boîtier (10) et dans lequel un élément d'encliquetage complémentaire (21) de l'élément de raccordement (20) peut être amené en appui par complémentarité de forme et/ou par force.

4. Boîtier (10) selon l'une des revendications précédentes,
**caractérisé en ce que,**
l'unité de montage (11) comporte un élément de ressort (16) afin d'appliquer une force de ressort (F) à l'élément de raccordement (20) lors de l'insertion dans l'unité de montage (11) dans une direction opposée à une direction de montage (M) de l'élément d'actionnement (102) sur le boîtier (10).

5. Système (100) comprenant :
un boîtier (10) pour un commutateur de démarrage (101) d'un véhicule automobile conformément à l'une des revendications précédentes
et un élément de raccordement (20) pour un élément d'actionnement (102) du commutateur de démarrage (101) auquel l'élément d'actionnement (102) peut être fixé,
dans lequel l'élément de raccordement (20) peut être fixé, dans une position de montage (A) à l'intérieur du boîtier (10), par complémentarité de forme et/ou par force sur la partie de raccordement (II) du boîtier (10) et, dans une position de fonctionnement (B), peut tourner librement à l'intérieur du boîtier (10).

6. Système (100) selon la revendication 5,
**caractérisé en ce que,**
l'élément de raccordement (20) présente un élément d'encliquetage complémentaire (21) qui, lorsque l'élément de raccordement (20) est inséré dans le boîtier (10), coopère avec l'unité de montage (11) afin de fixer l'élément de raccordement (20) en position de montage (A) à l'intérieur du boîtier (10) par complémentarité de forme et/ou par force sur la partie de raccordement (II) du boîtier (10).

7. Système (100) selon la revendication 5 ou 6,
**caractérisé en ce que,**
l'élément de raccordement (20) présente une partie d'actionnement (22) pour l'actionnement du commutateur de démarrage (101) et un réceptacle de fixation (23) pour la fixation de l'élément d'actionnement (102),
dans lequel, en particulier, la partie d'actionnement (22) présente un cône sensiblement conique (22a) en regard du commutateur de démarrage (101).

8. Système (100) selon l'une des revendications précédentes 5 à 7,
**caractérisé en ce que,**
l'élément d'encliquetage complémentaire (21) comporte au moins un auxiliaire de guidage (21a), notamment sous forme d'angles arrondis.

9. Système (100) selon l'une des revendications précédentes 5 à 8,
**caractérisé en ce que,**
l'élément de raccordement (20), en particulier l'élément d'encliquetage complémentaire (21), et l'unité de montage (11) forment une fermeture à baïonnette, de préférence à ressort.

10. Module de verrouillage (110) comprenant :
un système (100) selon l'une des revendications précédentes 5 à 9,
et un élément d'actionnement (102) pour le commutateur de démarrage (101),
dans lequel l'élément d'actionnement (102) peut être reçu dans la partie de fixation (I) du boîtier (10) à l'intérieur du boîtier (10).

11. Module de verrouillage (110) selon la revendication 10,
**caractérisé en ce que,**
l'élément d'actionnement (102) est conçu sous la forme d'un cylindre de fermeture ou d'un interrupteur marche/arrêt.

12. Module de verrouillage (110) selon la revendication 10 ou 11,
**caractérisé en ce**
**qu'**au moins un commutateur de démarrage (101) est prévu pour un démarreur de véhicule automobile sous la forme d'un interrupteur à pression, d'un interrupteur à glissière, d'un interrupteur rotatif ou d'un interrupteur à gradins, l'interrupteur de démarrage (101) pouvant être reçu dans la partie terminale (III) du boîtier (10) à l'intérieur du boîtier (10).

13. Procédé pour fixer un élément de raccordement (20) pour un élément d'actionnement (102) d'un commutateur de démarrage (101) d'un véhicule automobile dans une position de montage (A) à l'intérieur d'un boîtier (10) pour le commutateur de démarrage (101), **caractérisé en ce que** le boîtier (10) est conçu selon l'une des revendications précédentes 1 à 4,
**la méthode comprenant les étapes suivantes :**
a) Insertion de l'élément de raccordement (20) dans une unité de montage (11) du boîtier (10),
b) tourner l'élément de raccordement (20) jusqu'à ce qu'une liaison positive et/ou non positive avec l'unité de montage (11) puisse être établie.

14. Procédé selon la revendication 13,
**caractérisé en ce que**
dans l'étape a), l'élément de raccordement (20) est inséré contre une force de ressort (F) d'un élément de ressort (16)
et/ou que la méthode comporte au moins une étape supplémentaire :
c) reculer l'élément de raccordement (20) en détendant un élément de ressort (16) de l'unité de montage (11) jusqu'à ce que l'élément de raccordement (20) soit reçu dans un renfoncement (15) de l'unité de montage (11), ce qui permet de réaliser une liaison par complémentarité de formes et/ou par force de l'élément de raccordement (20) avec l'unité de montage (11).
